# EUROPEAN PATENT APPLICATION

(11) **EP 3 964 990 A1**
(43) Date of publication of application: **09.03.2022**
(21) Application number: 20927373.9
(22) Date of filing: 27.03.2020
(51) Int. Cl.: G06F 21/56

(54) **METHOD AND SYSTEM FOR DECIDING ON THE NEED FOR AN AUTOMATED RESPONSE TO AN INCIDENT**

(30) Priority: 25.03.2020 RU 2020112223
(71) Applicant: Group IB TDS, Ltd, Moscow 121205 (RU)
(72) Inventor: VOLKOV, Dmitry Aleksandrovich, Moscow, 115563 (RU)
(74) Representative: De Vries & Metman
(86) International application number: PCT/RU2020/000165
(87) International publication number: WO 2021/194370

(57) **Abstract**

This technical solution relates to a computer field, in particular, to a method and a system for making a decision of automated incident response. The computer-implementable method for making a decision of automated incident response comprising: receiving, by an interface module, a signal of at least one incident, transmitting the incident information to an analytical module, wherein determining, whether the incident has been prevented before, and if not, then determining the incident threat severity, and if the threat severity exceeds a preset threshold, responding to the incident using the analytical module and a response module.

## Description

### FIELD

This technical solution relates to a computer field, in particular, to the method and system for making a decision of automated incident response.

### BACKGROUND

The prior art source RU 2610395 C1, 09.02.2017, discloses a method of downloading data on system events from all user computers to a security server, registering at least one of these system events caused security incident. The downloaded events are analyzed by searching among them such events which are similar to the events preceding already registered security incident. There is carried out a correlation analysis of data on time-phased and place-phased events using additional rules including the following actions: specifying background conditions and analysis depth level, forming initial rule set for correlation analysis, selecting significant rules into the effective rule set, detecting and eliminating conflicts among the selected rules, checking the correspondence of actual analysis depth for each rule from the effective rule set, searching and applying the solutions to eliminate effects and prevent security incident. Security incident report is formed.

The prior art source US 8,776,241 B2, 08.07.02014, discloses a method of automated response to an incident related to security in computer networks. The methods include: client computer-assisted management of at least one security set module adapted to secure information stored at the client computer and to detect incidents related to security. The client computer registers records at the level of events representing activity of at least one security set module. At least one security set module detects an incident affecting information security at the client computer, detection is executed based on incident detection criteria. In response to incident detection the client computer associates events selected from the level records to the incident, wherein associate is executed based on incident associate criteria. The client computer provides the remote server with events selected from the level records for analysis. The client computer receives at least one recommendation for corrective actions which are to be executed automatically at the client computer. Recommendations for corrective actions are received form the remote server, including incident elimination instructions. The client computer automatically executes incident elimination instructions. The client computer receives instructions on updating at least one of: incident detection criteria, incident associate criteria or their combination with new set of corresponding criteria.

The prior art sources disclose incident detection in the response system itself. In the proposed solution the incident detection signal is transmitted to the automated response system together with threat properties using external threat search systems. Besides, in the proposed solution there is determining, whether the detected threat is prevented or not, and if it is determined that the threat is not prevented, there is selecting of one of the predefined response categories, where there are response instructions for each category.

### SUMMARY

Technical problem, for solving of which the claimed art is intended, is creation of computer-implementable method and system for making a decision of automated incident response, which are defined in the primary claims. Additional variants of this technique implementation are presented in the subclaims.

The technical result consists in automated response to an incident.

The claimed result is achieved due to implementation of the computer-implementable method for making a decision of automated incident response, the method comprising:
receiving, by an interface module, a signal of at least one incident from external systems, transmitting the incident information to an analytical module, wherein:
   determining, whether the incident has been prevented before, and if not, then
   determining the incident threat severity, and if the threat severity exceeds a preset threshold,
   responding to the incident using the analytical module and a response module.

In the particular embodiment of the described method the incident data comprise at least incident category, incident threat severity, name of the host where incident occurred and level of reliability that the incident is not a false response.

In other embodiment of the described method the incident category is additionally attributed to one of three response categories.

In other embodiment of the described method, if an incident relates to the first response category, the response module stops malicious process and isolates the host.

In other embodiment of the described method, if an incident relates to the second response category, the analytical module determines the account where the activity occurs, and if the account does not relate to privileged accounts, it is blocked.

In other embodiment of the described method, if the activity occurs from a privileged account, the reliability level is compared to the preset threshold, and if the reliability level is below the preset threshold, the privileged account is blocked.

In other embodiment of the described method the privileged account is blocked if the number of blocked privileged accounts for preset time is less than N₁ accounts.

In other embodiment of the described method, if an incident relates to the third response category, the analytical module determines what process has caused the incident, and whether the host operating system, where the incident has occurred, is server operating system.

In other embodiment of the described method, if an incident is caused by a system process and the host operating system is server operating system, the response module copies the content of random-access memory.

In other embodiment of the described method the content of random-access memory is copied if less than N₂ responses have been done for preset time.

In other embodiment of the described method, if an incident is caused by a non-system process and the host operating system is server operating system, the response module copies the content of random-access memory and stops the process.

In other embodiment of the described method the content of random-access memory is copied (memory dump is got) and the process is stopped, if less than N₃ responses have been done for preset time.

In other embodiment of the described method, if the host operating system is not server operating system, the response module isolates the host where the incident has occurred from the network.

In other embodiment of the described method the host is isolated from the network if less than N₄ hosts have been isolated for preset time.

In other embodiment of the described method the automated response process is executed by the response module at the level of file, host and corporate network.

In other embodiment of the described method the response at the file level comprises at least one of the following:
blocking at least one malicious file and quarantining it;
sending at least one malicious file to isolated environment for dynamic analysis;
searching for at least one malicious file, being child malicious file, on at least one host, and deleting it;
stopping the malicious process.

In other embodiment of the described method the response at the host level comprises at least one of the following:
collecting incident data;
copying the content of random-access memory (memory dump);
sector-based copying of nonvolatile memory;
isolating the host from the network;
blocking start of any applications except for original programs developed by the operating system manufacturer.

In other embodiment of the described method the incident information comprises at least: data on programs automatically loaded at starting the operating system, Prefetch files, running processes, system event logs, content of temporary directories.

In other embodiment of the described method the response at the corporate network level comprises at least one of the following:
blocking the user account at the domain level;
running incident handling script files;
sending a report.

The claimed result is also achieved due to the system for making a decision of automated incident response, the system comprising:
an interface module, the interface module configured to receive incident detection signals from external systems;
an analytical module, the analytical module configured to determine conditions and select methods of automated response;
a response module, the response module configured to execute automated response according to the above method.

### DESCRIPTION OF THE DRAWINGS

Implementation of the technique will be further described in accordance with the attached drawings, which are presented to clarify the technique chief matter and by no means limit the field of the technique. The following drawings are attached to the application:
Fig. 1 illustrates the system for making a decision of automated incident response.
Fig. 2 illustrates the computer-implementable method for making a decision of automated incident response.
Fig. Fig. 3 illustrates one of the possible algorithms of the computer-implementable method for making a decision of automated incident response.
Fig. 4 illustrates the example of the computer device schematic diagram.

### DETAILED DESCRIPTION

Numerous implementation details intended to ensure clear understanding of this technique are listed in the detailed description of the technique implementation given next. However, it is obvious to a person skilled in the art how to use this technique as with the given implementation details as without them. In other cases, the well-known methods, procedures, and components have not been described in detail so as not to obscure unnecessarily the present technique.

Besides, it will be clear from the given explanation that the technique is not limited to the given implementation. Numerous possible modifications, changes, variations, and replacements retaining the chief matter and form of this technique will be obvious to persons skilled in the art.

The claimed computer-implementable method is intended to be implemented as isolated algorithm in operation of large multicomponent system. The multicomponent system could be implemented in different ways and comprise different functional blocks or subsystems, including, for example, antivirus program, isolated environment (sandbox), malware detonation platform, have a connection to an emergency response center (CERT), etc. These and other functional blocks or subsystems not being part of the described automated response system hereinafter in this application are referred to as "external systems". It is understood that they act in concert with the described system, but they in and of themselves do not form a part of it.

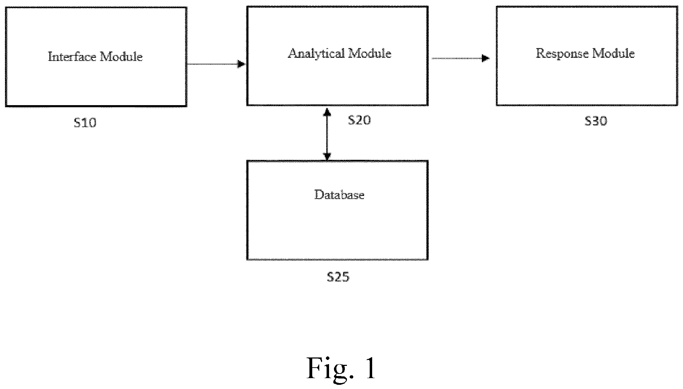

The computer-implementable method for making a decision of automated incident response is implemented by the system for making a decision of automated incident response, illustrated in Fig. 1, which consists in the following functional modules: the interface module configured to receive incident detection signals from external systems (S10), the analytical module configured to determine conditions and select methods of automated response (S20), and also to access the database (S25) enabling to obtain data from it and store data in it, and the response module (S30) configured to execute automated response when implementing the above method.

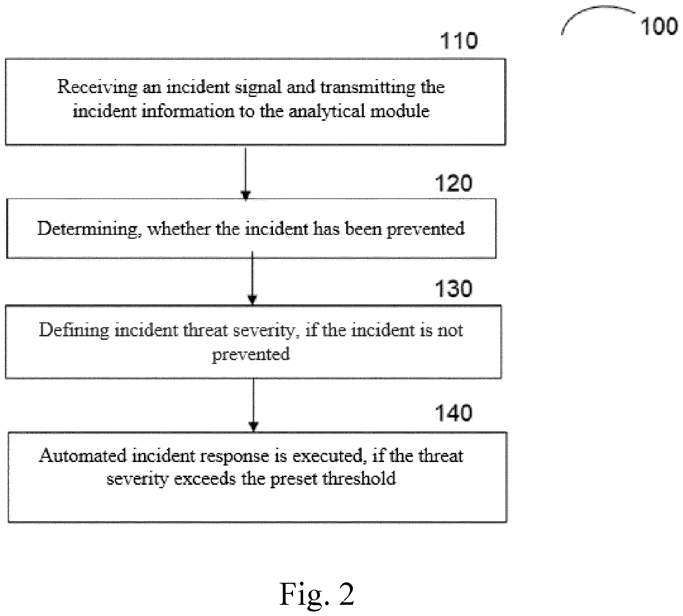

As illustrated in Fig. 2, the claimed computer-implementable method for making a decision of automated incident response (100) is implemented as follows.

Automated response is implemented in case of detection of computer security threat or other incident. It is understood that search and detection of a threat or an incident as such are executed by external systems. When a threat is detected, the corresponding signal is sent to the described system, and this system executes automated response.

At step 110, as illustrated in Fig. 2, there is receiving of at least one incident signal by the interface module (S10 in Fig. 1). Incident signal is characterized by at least one of the following properties.

Threat Category (Category). The category indicates what namely incident is detected: running of specific malware, for example, ransomware, worm, trojan, lateral movement, signs of advanced persistent threat (so called APT), etc.

Threat Severity (Severity). Severity normally depends on threat category. For example, if such unwanted software as adware is detected, the threat severity could be low. At the same time, if ransomware or worm is detected, the threat severity could be high. Threat severity assessment is formed by the system which has detected the treat, for example, by malware detonation platform known as TDS Polygon, or by isolated environment - sandbox. Assessment could be binary (0 or 1) or categorical, when any threat relates to one of four, for example, preset categories, such as critical, high, medium, low.

Reliability Level (Reliability). This is a numerical indicator corresponding to reliability of the external system detected the threat, that the threat detection verdict is not a false response.

Name or address of the host where incident has occurred. Host in this application materials means a network node. Hosts could be as physical devices - computers, servers, laptops, smartphones, tablets, game consoles, TV sets, printers, network hubs, switches, routers, unspecified devices combined by IoT (Internet of Things), etc., as hardware-software solutions enabling to arrange several network nodes at one physical device, for example, so called virtual hosts Apache, etc.

Incident signal can also comprise additional information, for example, file name and checksum of malware which running is detected, IP address or domain name of web server external in relation to the protected network, name of the account from where lateral movementin the protected network is observed, etc.

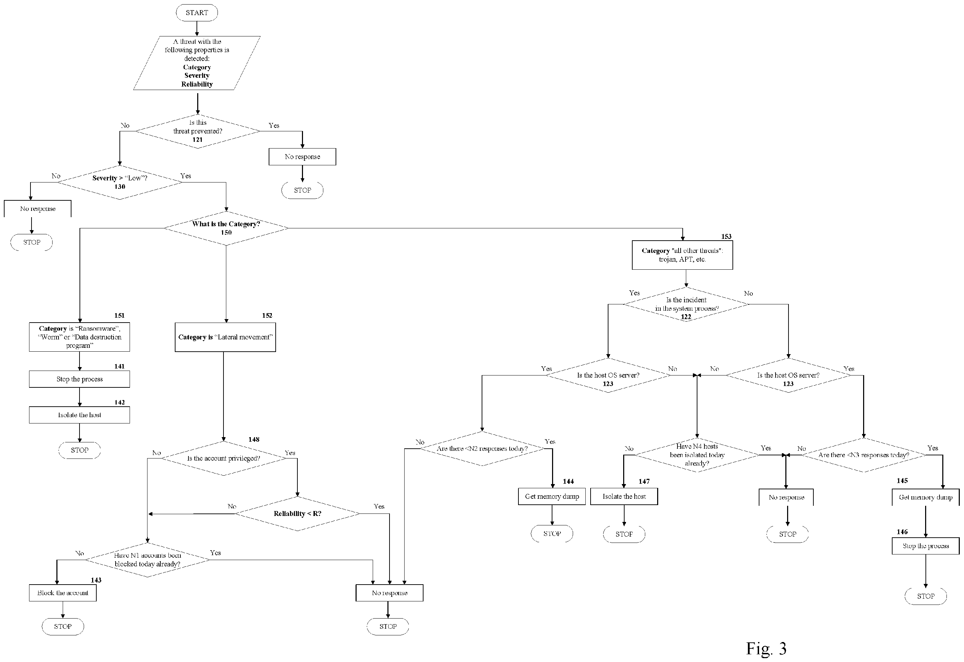

Then, the received incident data are transmitted to the analytical module (S20 in Fig. 1). At step 120, as illustrated in Fig. 2, there is defining by the analytical module (S20 in Fig. 1), whether this incident has been prevented before or not (step 121 in Fig. 3). This step is intended to exclude response in cases when an incident definitely does not carry a threat. For example, when malware is activated in a sandbox, in isolated environment, or a malicious file blocked before is detected again. In such cases there is no automated incident response.

Defining, whether this incident carries a threat, is executed by the analytical module (S20 in Fig. 1) by checking against the database (S25 in Fig. 1). This base comprises data on all hosts being part of the network where the described system is running, and also on all response procedures executed by the system within the specified time period, for example, in the day before.

If name or address of the host, where an incident has occurred, is the same as one of the names or addresses of the hosts, where sandboxes, malware detonation systems and similar isolated environments are located, it is considered that the incident is prevented and there is no incident response.

If file name or checksum of malware, which running is detected, is the same as one of the file names or checksums of malwares already blocked by the system at this host during one of response procedures executed within the specified time period, it is considered that the incident is prevented and there is no incident response.

If incident signal does not comprise malware file name or checksum, for example, if the incident is lateral movement, external IP address (being in the list of malicious addresses) request or APT signs, the incident is considered as not prevented, and response is required.

The same decision is made in cases, when an incident occurs at the host not being a sandbox, or when the response to this malicious file executed before is not recorded.

If it has been defined that the incident is not prevented, the incident threat severity is defined (step 130 in Fig. 2). If the incident threat severity is less than the preset value, there is no incident response. If the incident threat severity is higher than the preset value, automated incident response is executed (step 140 in Fig. 2). Depending of the incident data received the automated response could be executed in different ways. Non-limiting example of further possible steps of the automated response algorithm is illustrated in Fig. 3.

It should be understood, that the algorithm illustrated in Fig. 3 is namely an example, and there are multiple alternative embodiments of the described system.

In particular, the number of the listed response categories (algorithm branches in Fig. 3) could be more or less than three. For example, in contrast to Fig. 3, incident of "trojan distribution" type and incident of "APT" type could belong to two different response categories. Similarly, incidents "worm distribution", "running of data destruction program" and "ransomware running" could belong to three different response categories, etc.

Alternatively, grouping of different type incidents by response categories could also differ from the one illustrated in Fig. 3. For example, in one of the possible embodiments of the described system the incident of "trojan distribution" type (step 153 in Fig. 3) and incident of "worm distribution" type (step 151 in Fig. 3) could be placed in one response category but not in different categories as in the example below.

Response is executed at the following levels:
at the file level;
at the host level;
at the corporate network level.

Response at the file level includes:
- blocking and guaranteeing the malicious file;
- sending the malicious file to isolated environment (sandbox of any known type or malware detonation platform of any known type, e.g. TDS Polygon) for dynamic analysis;
- searching for original and child malicious files at all hosts, and their deleting;
- stopping the malicious process.

Response at the host level includes:
- collecting the incident information required for investigations. Incident information comprises at least data on startup programs, Prefetch files, running processes, system event logs, content of temporary directories;
- copying the content of random-access memory (memory dump);
- sector-based copying of nonvolatile memory (e.g. HDD, SDD, etc.);
- isolating the host from the network;
- blocking start of any applications except for original programs developed by the operating system manufacturer.

Response at the corporate network level includes:
- blocking the user account at the domain level;
- running incident handling script files; for example, adding the malicious mail servers to the block list or blocking IP addresses of malware management servers at the firewall level.

Response at different levels is executed depending on the incident occurred, its properties, and also practicability of executing specific measures. Thus, response at different levels includes execution of the above steps fully or partially.

Further, during step 130 (in Fig. 2) proceeds to defining the incident category (step 150 in Fig. 3). Three response categories could be defined within the scope of non-limiting example of possible embodiment of the claimed technique, see Fig. 3.

The first response category (151), within the scope of this example, includes incidents caused by the following threat types, but not limited to: ransomware, worm, data destruction program.

The second response category (152), within the scope of this example, includes incidents related to lateral movement.

The third response category (153), within the scope of this example, includes all the other incidents not related to the first or second response category, e.g. trojan, APT, etc.

If an incident within the scope of this example relates to the first response category (151), making use of the response module (S30 in Fig. 1) at step 140 in accordance with Fig. 2, there is stopping the malicious process at the file level (step 141 in Fig. 3), then isolating the host at the host level (step 142 in Fig. 3).

### Embodiment example.

One of the employees of the company, which computer network is protected by the cyber security system, comprising the system implementing this method, receives from the domain administrator, which account has been compromised, an e-mail with an attachment and text prompting to review the attached document as soon as possible. The employee opens the attached document that results in infection of its computer with a malware of worm type. The latter starts distributing in the local network.

At least one of the "external" systems continuously searches for threats. When worm distribution is detected, the "external" system forms and transmits an incident signal to the system implementing the described method, and this signal enters the interface module of the system (S10 in Fig. 1) implementing the described method.

This signal will have the following properties:
Threat Severity (Severity): critical;
Threat Category (Category): worm;
Reliability Level (Reliability): 99%;
Network segment where the computer, in which the incident has occurred, is located: segment name;
Workgroup \ domain which it belongs to: domain name \ workgroup name;
Whose working place (position) this computer is: employee's computer.

There could be more such signals, since some other computers in the local network could also be worm infected before the incident response system actuation. Actions of the described system will be similar in relation to each of such signals.

In accordance with Fig. 3, step 121, the analytical module (S20 in Fig. 1) defines that the malware has been actuated not in the sandbox, and that this malicious file has not been blocked before. Therefore, the system in accordance with Fig. 3, at step 130 assesses the threat severity, and since it exceeds the low level preset in this example, the system executes automated incident response at step 150.

Since the threat category is "worm", further response in the described example will be executed according to the first response category (step 151 in Fig. 3).

The following steps will be executed at the file level at step 141 (Fig. 3):
blocking and guaranteeing the malicious file;
the malicious file could be additionally sent for the dynamic analysis (it depends on whether this kind of worm is known);
searching for original and child malicious files at all computers, and their deleting;
stopping the malicious process.

The following steps could be executed at the host level at step 142 (Fig. 3):
isolating the host from the network (to stop worm distribution);
collection of necessary evidences. An archive comprising the information required for operational research (data on startup programs, Prefetch files, running processes, system event logs, content of temporary directories, etc.) could be created at this step for investigation of malware penetration technique.

If a worm does not carry any additional load, i.e. other malwares distributed together with it (let us suppose that does not carry), there could be no copying the content of random-access memory and sector-based copying of nonvolatile memory.

A report on response results will be sent to persons in charge at the corporate network level. That is the end of the automated response to the described incident (end of the embodiment example).

Should an incident prove to be in the second response category (step 152 in Fig. 3), the analytical module (S20 in Fig. 1) determines the account where the activity occurs, and if the account does not relate to privileged accounts, that is defined at step 148 (Fig. 3), and the number of blocked privileged accounts for preset time is less than N₁ accounts, where N₁ is a preset integral number, this account is blocked (step 143 in Fig. 3) at the corporate network level by the response module (S30 in Fig. 1), that corresponds to step 140 in Fig. 2. If the number of blocked privileged accounts for preset time exceeds N₁ accounts, there is no incident response.

Privileged account in this application materials means an account entitled to install, change and manage some information system or device. In the corporate IT infrastructure a privileged account could belong to, for example, system administrators, application administrators, administrators of databases, cloud services, web sites, and also to managers of some departments, safety department, cyber security department, etc.

If the activity originates from a privileged account, the threat reliability level (Reliability) at step 148 (Fig. 3) is compared to the preset threshold (e.g. threshold value R = 80%), and if the reliability level is below the preset threshold, and also if the number of blocked privileged accounts for preset time is less than N₁ accounts, the privileged account is blocked (step 143 in Fig. 3) at the corporate network level by the response module (S30 in Fig. 1) in accordance with step 140 in Fig. 2 at the corporate network level. If the number of blocked privileged accounts for preset time exceeds N₁ accounts, there is no incident response.

If an incident within the scope of this example relates to the third response category (step 153 in Fig. 3), the analytical module (S20 in Fig. 1) determines what process has caused the incident (step 122 in Fig. 3), and whether the host operating system, where the incident has occurred, is server one (step 123 in Fig. 3).

If an incident is caused by a system process and the host operating system is server one, the response module (S30 in Fig. 1), in accordance with step 140 in Fig. 2, copies the content of random-access memory (memory dump) (step 144 in Fig. 3) as a response at the host level. The content of random-access memory is copied, if less than N₂ responses have been done for preset time, where N₂ is a preset integral number. If more than N₂ responses have been done for preset time, there is no incident response.

If an incident is caused by a non-system process and the host operating system is server one, the response module (S30 in Fig. 1), in accordance with step 140 in Fig. 2, copies the content of random-access memory (step 145 in Fig. 3) and stops the malicious process (step 146 in Fig. 3) as a response at the host level. The content of random-access memory (memory dump) is copied and the process is stopped, if less than N₃ responses have been done for preset time, where N₃ is a preset integral number. If no less than N₃ responses have been done for preset time, there is no incident response.

If the host operating system is not server one, the response module (S30 in Fig. 1), in accordance with step 140 in Fig. 2, isolates the host where the incident has occurred from the network (step 147 in Fig. 3), as a response at the host level. The host is isolated from the network, if less than N₄ hosts have been isolated for preset time, where N₄ is a preset integral number, otherwise, there is no incident response.

### Embodiment example.

An intruder has got remote access to the operating system of one of the hosts of the controlled network using a privileged account, for example, domain administrator account. The intruder starts to collect data on the system and network neighbourhood, and for this purpose uses a command line interpreter cmd.exe, being a part of OC Windows. It executes the following commands at the host under its control:
cmd.exe /c hostname
cmd.exe /c whoami
cmd.exe /c ver
cmd.exe /c ipconfig -all
cmd.exe /c ping www.google.com
cmd.exe /c query user
cmd.exe /c net user
cmd.exe /c net view
cmd.exe /c net view /domain
cmd.exe /c reg query "HKCU\SOFTWARE\Microsoft\Windows\CurrentVersion\Internet Settings
cmd.exe /c tasklist /svc
cmd.exe /c netstat -ano | find TCP

Each of these commands is legitimate in itself. However, such sequence of legitimate commands execution by pre-integrated means of the operating system is malicious. When such sequence is detected, the rule will operate in at least one of the "external" systems continuously searching for threats. Rule operation means that the "external" system forms an incident signal which enters the interface module of the system implementing the described method.

This signal will have the following parameters:
Threat Severity (Severity): high;
Threat Category (Category, what namely happens): advanced persistent threat (APT);
Reliability Level (Reliability): 87%;
Network segment where the computer, in which the incident has occurred, is located: segment name;
Workgroup \ domain which it belongs to: domain name \ workgroup name;
Whose working place (position) this computer is: domain administrator computer.

In accordance with step 121 in Fig. 3, the analytical module (S20 in Fig. 1) defines that the incident has occurred not in the sandbox, and that there are no malicious files, but the threat is not prevented. Further, at step 130 the analytical module defines that the treat level is high and automated incident response is required.

Since in this case the threat category will be "APT", response in this example will be executed according to the algorithm branch corresponding to step 153 in Fig. 3, which APT in the example in question relates to. Since the incident is has occurred in the non-system process (processes of cmd.exe interpreter do not relate to system ones), and the host operating system, where the incident has occurred, is not server one, there is additional checking, whether N₄ hosts have been isolated today (on the day of threat detection); let us assume, N₄ = 5. The system has not isolated 5 hosts today yet, therefore, the response will be executed in the form of "isolate the host" (step 147 in Fig. 3).

Since malicious files are not used in this incident, there is no incident response at the file level.

At the host level the following could be executed: collection of necessary evidences, creation of the archive and sending it to the controlling ("external") server comprising the information required for operational research. In this case it could be information about all currently running processes, about startup tags, Prefetch files, system event logs, content of temporary directories, etc. After receiving the archive the host will be isolated form the network, due to this the intruder controlling the system will lose an ability to continue reconnaissance activities, since the remote connection will be lost permanently.

Since malicious files are not used in this incident, there could be no copying the content of random-access memory and sector-based copying of nonvolatile memory.

At the corporate network level, the user account, which credentials have been compromised at the domain level, will be blocked. Besides, a report on response results will be sent to persons in charge. That is the end of the automated response to the incident (end of the embodiment example).

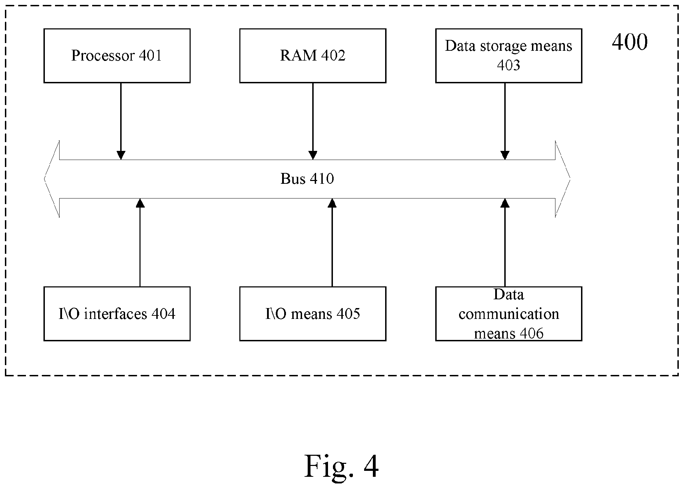

In Fig. 4 hereafter there will be presented the schematic diagram of the computer device (400), processing the data, required for embodiment of the claimed solution.

In general, the device (400) comprises such components as: one or more processors (401), at least one memory (402), data storage means (403), input/output interfaces (404), input/output means (405), networking means (406).

The device processor (401) executes main computing operations, required for functioning the device (400) or functionality of one or more of its components. The processor (401) runs the required machine-readable commands, contained in the random-access memory (402).

The memory (402), typically, is in the form of RAM and comprises the necessary program logic ensuring the required functional.

The data storage means (403) could be in the form of HDD, SSD, RAID, networked storage, flash-memory, optical drives (CD, DVD, MD, Blue-Ray disks), etc. The means (403) enables to store different information, e.g. the above-mentioned files with data sets obtained from different hosts, databases comprising records recorded in different periods for each user of time intervals, user identifiers, etc.

The interfaces (404) are the standard means for connection and operation with server side, e.g. USB, RS232, RJ45, LPT, COM, HDMI, PS/2, Lightning, FireWire, etc.

Selection of interfaces (404) depends on the specific device (400), which could be a personal computer, mainframe, server cluster, thin client, smartphone, laptop, etc.

As input/output means (405) there could be used: keyboard, joystick, display (touch-screen display), projector, touch pad, mouse, trackball, light pen, loudspeakers, microphone, etc.

Networking means (406) are selected from a device providing network data receiving and transfer and could represent, e.g. Ethernet-card, WLAN/Wi-Fi module, Bluetooth module, BLE module, NFC module, IrDa, RFID module, GSM modem, etc. Making use of the means (406) provides an arrangement of data exchange through wire or wireless data communication channel, e.g. WAN, PAN, LAN, Intranet, Internet, WLAN, WMAN or GSM.

The components of the device (400) are interconnected by the common data bus (410). The application materials have represented the preferred embodiment of the claimed technical solution, which shall not be used as limiting the other particular embodiments, which are not beyond the claimed scope of protection and are obvious to persons skilled in the art.

## Claims

1. A computer-implementable method for making a decision of automated incident response, the method comprising:
receiving, by an interface module, a signal of at least one incident from external systems, transmitting the incident information to an analytical module, wherein:
determining, whether the incident has been prevented before, and if not, then
determining the incident threat severity, and if the threat severity exceeds a preset threshold,
responding to the incident using the analytical module and a response module.

2. The method of claim 1, wherein the incident data comprise at least incident category, incident threat severity, name or address of the host where incident occurred and level of reliability that the incident is not a false response.

3. The method of claim 2, wherein the incident category is additionally attributed to one of three response categories.

4. The method of claim 3, wherein, if the incident relates to the first response category, the response module stops malicious process and isolates the host.

5. The method of claim 3, wherein, if the incident relates to the second response category, the analytical module determines the account where the activity occurs, and if the account does not relate to privileged accounts, it is blocked.

6. The method of claim 5, wherein, if the activity occurs from the privileged account, the reliability level is compared to the preset threshold, and if the reliability level is below the preset threshold, the privileged account is blocked.

7. The method of claim 6, wherein the privileged account is blocked if the number of blocked privileged accounts for preset time is less than N₁ accounts.

8. The method of claim 3, wherein, if the incident relates to the third response category, the analytical module determines what process has caused the incident, and whether the host operating system, where the incident has occurred, is server operating system.

9. The method of claim 8, wherein, if the incident is caused by a system process and the host operating system is server operating system, the response module copies the content of random-access memory.

10. The method of claim 9, wherein the content of random-access memory is copied if less than N₂ responses have been done for preset time.

11. The method of claim 8, wherein, if the incident is caused by a non-system process and the host operating system is server operating system, the response module copies the content of random-access memory (memory dump) and stops the process.

12. The method of claim 11, wherein the content of random-access memory is copied if less than N₃ responses have been done for preset time and the process is stopped.

13. The method of claim 8, wherein, if the host operating system is not server operating system, the response module isolates from the network the host where the incident has occurred.

14. The method of claim 13, wherein the host is isolated from the network if less than N₄ hosts have been isolated for preset time.

15. The method of claim 1, wherein the automated response process is executed by the response module at the level of file, host and corporate network.

16. The method of claim 15, wherein the response at the file level comprises at least one of the following:
blocking at least one malicious file and quarantining it;
sending at least one malicious file to isolated environment for dynamic analysis;
searching for at least one malicious file, being child malicious file, on at least one host, and deleting it;
stopping the malicious process.

17. The method of claim 15, wherein the response at the host level comprises at least one of the following:
collecting incident information;
copying the content of random-access memory (memory dump);
sector-based copying of nonvolatile memory;
isolating the host from the network;
blocking start of any applications except for original programs developed by the operating system manufacturer.

18. The method of claim 17, wherein the incident information comprises at least: data on programs automatically loaded at starting the operating system, Prefetch files, running processes, system event logs, content of temporary directories.

19. The method of claim 15, wherein the response at the corporate network level comprises at least one of the following:
blocking a user account;
running incident handling script files;
sending a report.

20. A system for making a decision of automated incident response, the system comprising:
an interface module, the interface module configured to receive incident detection signals from external systems;
an analytical module, the analytical module configured to determine conditions and select methods of automated response;
a response module, the response module configured to execute automated response according to claims 1-19 of the above method.
